# EUROPÄISCHE PATENTANMELDUNG

(11) **EP 2 189 742 A1**
(43) Veröffentlichungstag der Anmeldung: **26.05.2010**
(21) Anmeldenummer: 08020119.7
(22) Anmeldetag: 19.11.2008
(51) Int. Cl.: F27B 1/08, C03B 5/12

(54) **Kupolofen mit Bodenheizung**

(71) Anmelder: Linde AG, 80331 München (DE); Odenwald Faserplattenwerk GmbH, 63916 Amorbach (DE); Grenzebach BSH GmbH, 36251 Bad Hersfeld (DE)
(72) Erfinder: Niehoff, Thomas, 85229 Markt Indersdorf (DE); Plaschke, Herbert, 46145 Oberhausen (DE); Rogge, Dirk, 63916 Amorbach (DE); Rudolph, Bernd, 36251 Bad Hersfeld (DE)

(57) **Zusammenfassung**

Die Erfindung betrifft einen Schachtofen, insbesondere Kupolofen, mit einem Schacht (3) und mit einem unterhalb des Schachtes (3) angeordneten Ofenunterteil (4) mit einem Boden (8), der mit einer Bodenheizung (9, 14) versehen ist. (Figur)

## Beschreibung

Die Erfindung betrifft einen Schachtofen, insbesondere Kupolofen, mit einem Schacht und mit einem unterhalb des Schachtes angeordneten Ofenunterteil mit einem Boden. Ferner bezieht sich die Erfindung auf ein Verfahren zum Schmelzen eines Ausgangsmaterials in einem Schachtofen, der einen Schacht und ein unterhalb des Schachtes angeordnetes Ofenunterteil mit einem Boden aufweist.

Mineralwolle wird aus einem silikatischen Ausgangsmaterial hergestellt, welches zunächst eingeschmolzen und dann zerfasert wird. Als Ausgangsmaterial werden natürliche Gesteine, wie beispielsweise Basalt, Diabas, Kalkstein oder Dolomit, künstliche Gesteine, wie zum Beispiel Formsteine nach festgelegter Rezeptur, Gläser, metallische Schlacken oder andere mineralische Materialien eingesetzt.

Im Folgenden werden die Begriffe Mineralwolle oder Mineralfasern synonym verwendet und sollen alle Arten von aus dem oben genannten Ausgangsmaterial hergestellten Fasern umfassen.

Das Ausgangsmaterial wird in einem Schmelzofen eingeschmolzen. In der Regel wird hierzu ein Schachtofen, insbesondere ein Kupolofen, eingesetzt. Die entstehende mineralische Schmelze wird anschließend einer Zerfaserungseinrichtung zugeführt, welche die Schmelze in feine Mineralfasern zerfasert. Die Mineralfasern werden meist noch mit Bindemittel und Additiven versetzt, gegebenenfalls weiter aufbereitet, um schließlich zu Akustikplatten, Dämmplatten oder -bahnen oder Formkörpern verarbeitet zu werden. Die so aus Mineralwolle hergestellten Dämmstoffe finden in bekannter Weise zur Schall- oder Wärmeisolierung oder als Brandschutzmaterialien Verwendung.

Das Einschmelzen des mineralischen Ausgangsmaterials erfolgt bisher meist in mit Koks befeuerten Kupolöfen. Der Kupolofen wird von oben mit Koks als Brennstoff, dem mineralischen Ausgangsmaterial und Zuschlagstoffen befüllt. Im unteren Teil des Ofens wird Verbrennungsluft eingeblasen. Die entstehende Mineralschmelze sammelt sich am Boden des Kupolofens und kann über einen Auslass abgezogen werden.

Das Anfahren von Kupolöfen hat bisher vorsichtig und langsam zu erfolgen, um Funktionsstörungen des Auslasss, z.B. eines Siphons, durch sich wieder verfestigende Schmelze zu verhindern. So werden bisher bis zu 24 Stunden für das Aufheizen und Anfahren eines Kupolofens benötigt.

Aufgabe vorliegender Erfindung ist es daher, ein Verfahren und eine Vorrichtung aufzuzeigen, die ein schnelleres Anfahren des Schachtofens erlauben.

Diese Aufgabe wird durch einen Schachtofen der eingangs genannten Art gelöst, wobei der Boden des Ofenunterteils mit einer Bodenheizung versehen ist.

Das erfindungsgemäße Verfahren zum Schmelzen eines Ausgangsmaterials in einem Schachtofen, der einen Schacht und ein unterhalb des Schachtes angeordnetes Ofenunterteil mit einem Boden aufweist, zeichnet sich dadurch aus, dass der Boden mit einer Bodenheizung beheizt wird.

Das Ofenunterteil kann beispielsweise als Schmelzkammer, welche im Wesentlichen zur Aufnahme und zum Überhitzen der Schmelze dient, oder auch als Brennkammer ausgeführt sein, welche mit Brennern zur zusätzlichen oder auch ausschließlichen Energiezufuhr zum Schachtofen versehen ist. In jedem Fall sammelt sich das geschmolzene Ausgangsmaterial als Schmelze am Boden des Ofenunterteils.

Es hat sich gezeigt, dass die Ursache für die Funktionsbeeinträchtigungen des Auslasss darin liegt, dass der Boden des Ofenunterteils nicht ausreichend schnell auf Betriebstemperatur gebracht wird.

Beim Anfahren des Ofens, das heißt beim Erhitzen des Kupolofens bzw. allgemein des Schachtofens von Umgebungstemperatur auf die Betriebstemperatur von beispielsweise 1500 °C, werden der Rost und das darauf befindliche Ausgangsmaterial relativ schnell auf eine Temperatur oberhalb der Schmelztemperatur des Ausgangsmaterials gebracht. Das Ausgangsmaterial schmilzt und beginnt auf den Boden des Ofenunterteils zu tropfen, der jedoch in diesem frühen Stadium noch eine Temperatur deutlich unterhalb der Schmelztemperatur des Ausgangsmaterials besitzt.

Die herabtropfende Schmelze erstarrt auf dem Boden teilweise oder wird zumindest zähflüssig. Auf dem Boden bildet sich so eine feste Schicht des Schmelzmaterials, wodurch die effektive Bodenhöhe ansteigt. Durch das sich ablagernde feste Schmelzmaterial wird außerdem die Auslassöffnung aus dem Ofenunterteil verkleinert, so dass weniger flüssige Schmelze aus dem Ofenunterteil herausfließt. Beide Effekte, die größere Bodenhöhe und der geringere Abfluss von flüssiger Schmelze, bewirken, dass die Füllhöhe im Ofenunterteil steigt.

Erfindungsgemäß wird daher der Boden des Ofenunterteils zumindest während der Anfahrzeit beheizt. Die Beheizung des Bodens erfolgt vorzugsweise mit einer elektrischen Bodenheizung. Als Heizmittel können zum Beispiel Heizplatten, Heizpatronen, Heizelektroden oder Heizdrähte vorgesehen sein. Alternativ oder ergänzend zu der elektrischen Bodenheizung können auch Brenner, insbesondere Gasbrenner, die den Ofenboden direkt beheizen, eingesetzt werden.

Die Erfindung kann bei herkömmlichen mit Koks befeuerten Kupolofenanlagen eingesetzt werden, findet aber insbesondere Anwendung bei kokslosen, mit Brennern beheizten Schacht- und Kupolöfen. Ein solcher koksloser Kupolofen weist einen Schacht auf, der in seinem unteren Teil mit einem Rost versehen ist und zur Aufnahme des Ausgangsmaterials dient. Das Ofenunterteil unterhalb des Rostes ist als Brennkammer ausgebildet und mit einem oder mehreren Brennern versehen. Anstelle einer Befeuerung des Ofens mit Koks erhitzen die in der Brennkammer befindlichen Brenner die Brennkammer und das auf dem Rost befindliche Ausgangsmaterial, welches schmilzt und sich als flüssige Schmelze am Boden der Brennkammer ansammelt. Über einen Auslass, beispielsweise einen Siphon, kann die Schmelze dann aus dem Kupolofen abgezogen werden.

Die Brenner bzw. die Flammen der Brenner strahlen ihre Wärme im Wesentlichen an die Wände der Brennkammer und nach oben ab. Beim Anfahren des Ofens wird daher der Boden von kokslos betriebenen Schacht- und Kupolöfen nur sehr langsam erwärmt. Die erfindungsgemäße Bodenheizung bringt daher bei solchen Öfen besondere Vorteile.

Zur Isolierung wird der Boden des Ofenunterteils von Vorteil mit einer feuerfesten Ausmauerung versehen. In diesem Fall ist es günstig, die Bodenheizung innerhalb der feuerfesten Ausmauerung vorzusehen. So kann zum Beispiel der Boden mit einer 200 bis 300 mm starken Ausmauerung aus feuerfesten Steinen versehen werden. Die Feuerfestausmauerung hat eine relativ hohe Wärmekapazität, das heißt, es wird eine relativ lange Zeit benötigt, um den Boden soweit zu erwärmen, dass sich die Schmelze nicht wieder verfestigt. Die Heizelemente, beispielsweise in Form von Heizpatronen oder Heizplatten, werden vorzugsweise mit den Feuerfeststeinen in den Boden eingemauert. Da eine solche feuerfeste Ausmauerung insbesondere bei kokslosen, mit Brennern befeuerten Öfen vorgesehen wird, wird die erfindungsgemäße Bodenheizung auch bevorzugt bei solchen Öfen eingesetzt.

Anstelle der Heizelemente oder zusätzlich zu den Heizelementen können noch Brenner vorgesehen sein, deren Flammen so ausgerichtet sind, dass diese den Ofenboden beheizen.

Weiter hat es sich als vorteilhaft erwiesen, den Boden um einen Winkel zwischen 1° und 5° gegen die Horizontale zu neigen, wobei sich am tiefsten Punkt des Bodens der Auslass befindet. Die Kombination von Bodenheizung und Bodenneigung bringt insbesondere beim Leerfahren eines kokslosen Schachtofens nach dem Abschalten der Brenner Vorteile. Die Schmelze wird nämlich durch die Bodenheizung im flüssigen Zustand gehalten und durch die Bodenneigung in Richtung des Auslasses gezwungen.

Zum Abziehen der flüssigen Schmelze aus dem Schachtofen ist das Ofenunterteil mit einem Auslass versehen. Von Vorteil ist der Auslass hierbei mit einer Auslassheizung zur Beheizung des Auslasses ausgerüstet. Die Auslassheizung dient zur Beheizung des Auslasses, um die durch den Auslass abfließende Schmelze im flüssigen Zustand zu halten. Insbesondere während des Anfahrens, wenn der Auslass noch kalt ist, das heißt eine Temperatur deutlich unterhalb der Schmelztemperatur des Ausgangsmaterials bzw. der Schmelze hat, besteht ansonsten die Gefahr, dass sich die Schmelze im Auslass verfestigt und diesen verschließt.

Unter dem Begriff "Auslass" werden alle Arten von Auslässen, Materialauslässen, Ausläufen sowohl mit als auch ohne angeschlossenen Siphon verstanden, die zum Abziehen der Schmelze aus dem Ofenunterteil dienen.

Als Auslassheizung kann ebenfalls eine elektrische Heizung vorgesehen sein. Es hat sich aber als günstiger erwiesen, den Auslass von außen mittels eines Brenners zu erhitzen. Zur Beheizung werden beispielsweise Brenngas-Luft-Brenner oder Brenner, die mit einem Brenngas und sauerstoffangereicherter Luft oder mit einem Brenngas und Sauerstoff betrieben werden, eingesetzt.

Die Erfindung ist insbesondere für kokslos betriebene Kupolöfen geeignet. Besonders bevorzugt ist der Einsatz des erfindungsgemäßen Verfahrens und des erfindungsgemäßen Schachtofens zum Schmelzen von Ausgangsmaterial zur Herstellung von Mineralwolle.

In herkömmlichen mit Koks befeuerten Schachtöfen herrscht in der Zone des Schachtes, in der das Ausgangsmaterial aufgeschmolzen wird, eine reduzierende Atmosphäre. Bei der Eisenherstellung werden so die im Roheisen enthaltenen Eisenoxide chemisch zu Eisen reduziert, welches sich flüssig am Boden sammelt. Eisen hat ein hohes Wärmeleitvermögen, so dass bereits am Boden des Ofens befindliches Eisen durch das nachtropfende flüssige Eisen erhitzt und im flüssigen Zustand gehalten wird. Eine Bodenheizung ist daher für das Anfahren häufig nicht notwendig.

Beim Schmelzen von Ausgangsmaterial zur Mineralwolleherstellung im kokslosen Schachtofen liegen dagegen in der Schmelzzone oxidierende Bedingungen vor. Die herabtropfende und sich am Boden sammelnde Schmelze hat im Gegensatz zu flüssigem Eisen nur eine sehr geringe Wärmeleitfähigkeit. Verfestigt sich ein Teil der Schmelze am Boden, so wird diese durch die nachtropfende Schmelze nicht wieder verflüssigt. Die erfindungsgemäße Bodenheizung bringt daher insbesondere bei Schachtöfen, die oxidierend gefahren werden, und bei kokslos betriebenen Kupolöfen große Vorteile.

Vorzugsweise wird der Boden mittels der Bodenheizung auf eine Temperatur von mehr als 1000 °C, bevorzugt mehr als 1200 °C, besonders bevorzugt mehr als 1300 °C aufgeheizt wird.

Die Erfindung erlaubt ein deutlich schnelleres Anfahren des Schachtofens. Die erfindungsgemäße Bodenheizung bringt den Boden der Brennkammer innerhalb kurzer Zeit auf Betriebstemperatur, das heißt auf eine Temperatur, bei der sich die Schmelze nicht wieder verfestigt. Ohne Bodenheizung werden bisher etwa 24 Stunden benötigt um einen Kupolofen aufzuheizen. Es hat sich gezeigt, dass durch die Erfindung die Anfahrzeit auf weniger als 10 Stunden verkürzt werden kann.

Sobald sich im Schachtofen oder Kupolofen nach dem Anfahren stationäre Temperaturverhältnisse eingestellt haben, wird die Bodenheizung von Vorteil wieder abgestellt. Der Boden und das Ofenunterteil haben dann eine ausreichend hohe Temperatur erreicht, damit die in das Ofenunterteil herabtropfende Schmelze im flüssigen Zustand verbleibt und sich nicht verfestigt. Eine zusätzliche Erwärmung des Ofenbodens mittels der Bodenheizung ist dann nicht mehr notwendig.

Die Erfindung bringt nicht nur beim Anfahren, sondern auch beim Entleeren des Schachtofens Vorteile. Werden bei einem kokslosen Ofen die Brenner abgestellt oder wird bei einem mit Koks beheizten Ofen die Koksbefeuerung eingestellt, so kühlt der Ofen langsam ab. Noch im Ofenunterteil befindliche Schmelze soll in der Regel noch möglichst vollständig aus dem Ofen abgezogen werden. Wird in diesem Fall die erfindungsgemäße Bodenheizung zugeschaltet, so wird die Schmelze länger im flüssigen Zustand gehalten werden bzw. die Schmelze wird nicht so schnell zähflüssig, so dass diese schneller über den Abstich oder Auslass aus dem Ofenunterteil abgezogen werden kann.

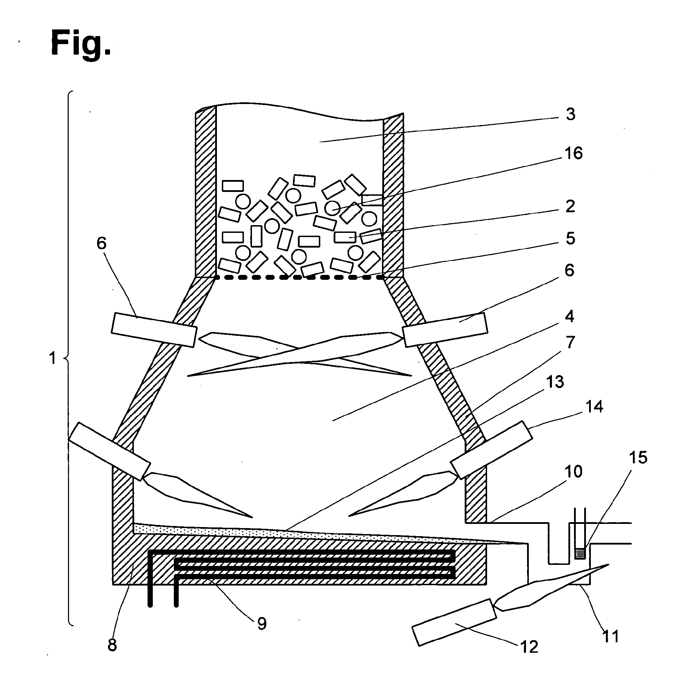

Die Erfindung sowie weitere Einzelheiten der Erfindung werden im Folgenden anhand von dem in der Zeichnung dargestellten Ausführungsbeispiel näher erläutert. Hierbei zeigt die

Figur einen erfindungsgemäßen Gaskupolofen zur Mineralwolleherstellung.

Der in der Figur schematisch dargestellte Gaskupolofen 1 dient zum Schmelzen von silikatischem Ausgangsmaterial 2 zur Mineralwolleherstellung, wie zum Beispiel Basalt, Diabas, Kalkstein, Dolomit und/oder Formsteinen.

Der Kupolofen 1 weist einen Schacht 3 und ein Ofenunterteil 4 auf, welches als Brennkammer 4 ausgebildet ist. Die Brennkammer 4 und der Schacht 3 werden durch einen Rost 5 getrennt, auf dem das zu schmelzende Ausgangsmaterial 2 sowie Al₂O₃-Kugeln 16 als Stützelemente liegen. Der Kupolofen 1 ist als koksloser Kupolofen ausgeführt. Die Beheizung des Kupolofens 1 erfolgt mittels mehrerer Gasbrenner 6, die in den Wänden 7 der Brennkammer 4 angeordnet sind. Die Gasbrenner 6 werden mit einem Brenngas, insbesondere Erdgas, und sauerstoffangereicherter Luft betrieben.

Der Boden 8 sowie die Wände 7 der Brennkammer 4 sind mit einer feuerfesten Ausmauerung versehen. Im Bereich des Bodens 8 besteht diese Ausmauerung aus einer zum Beispiel 250 mm dicken Schicht aus feuerfesten Steinen. Zwischen den feuerfesten Steinen ist eine elektrische Heizung 9 angeordnet, mittels der der Boden 8 erhitzt werden kann.

In der Figur sind weiterhin Gasbrenner 14 zur Beheizung des Bodens 8 dargestellt. Die Gasbrenner 14 können, wie in diesem Ausführungsbeispiel gezeigt, zusätzlich zu der elektrischen Heizung 9 vorgesehen werden oder auch anstelle der elektrischen Heizung 9 eingebaut werden.

Der Boden 8 der Brennkammer 4 ist um einen Winkel von 3° gegen die Horizontale geneigt. Am tiefsten Punkt der Brennkammer 4 besitzt diese einen Abstich oder Auslass 10, an den sich ein Siphon 11 anschließt. Der Siphon 11 kann mittels eines weiteren Gasbrenners 12 ebenfalls beheizt werden. Auch die Beheizung des Siphons 11 kann zusätzlich zur oder anstelle der Beheizung durch den Gasbrenner 12 elektrisch erfolgen. Hierzu wird in oder an dem Siphon 11 ein elektrisches Heizelement 15 angeordnet.

Zum Anfahren wird der Kupolofen 1 mit dem zu schmelzenden Ausgangsmaterial 2 und Stützelementen 16, wie z.B. Al₂O₃-Kugeln oder Al₂O₃-Briketts oder Kugeln oder Briketts aus anderen geeigneten hochschmelzenden Materialen, beschickt und anschließend werden die Gasbrenner 6 gezündet. Der Kupolofen 1 ist zu diesem Zeitpunkt noch kalt, das heißt die Temperatur des Kupolofens 1 liegt deutlich unterhalb der normalen Betriebstemperatur, die je nach dem zu schmelzenden Ausgangsmaterial 2 zwischen 1300 °C und 1600 °C liegt.

Die Gasbrenner 6 erhitzen über Strahlungswärme und konvektive Wärmeübertragung die Brennkammer 4, den Rost 5 und das darauf befindliche Material, umfassend das Ausgangsmaterial 2 und gegebenenfalls Stützelemente 16 aus einem hochschmelzenden Material. Der Boden 8 wird in diesem Stadium nicht ausreichend schnell erwärmt. Dies liegt zum einen daran, dass der Boden 8 mit einer starken Feuerfest-Ausmauerung versehen ist, welche eine hohe Wärmespeicherkapazität besitzt. Zum anderen wird der Boden 8 im Wesentlichen nur über Strahlung, aber nicht über Konvektion erwärmt.

Ohne die erfindungsgemäße Bodenheizung 9 würden in dieser Anfahrphase zum Beispiel die Wand 7 der Brennkammer 4 und der Rost 5 bereits eine Temperatur von 1200 °C besitzen, während der Boden 8 erst eine Temperatur von etwa 700 °C erreicht hätte. Sobald die Temperatur des Ausgangsmaterials 2 dessen Schmelzpunkt von zum Beispiel 1450 °C erreicht hat, beginnt sich das Ausgangsmaterial 2 zu verflüssigen und durch den Rost 5 auf den Boden 8 zu tropfen. Die Temperatur des Bodens 8 wäre dann aber noch zu niedrig, um die sich auf dem Boden 8 sammelnde Schmelze 13 im flüssigen Zustand zu halten. Die Schmelze 13 würde sich daher verfestigen beziehungsweise zähflüssiger werden.

Erfindungsgemäß wird daher der Boden 8 in der Anfahrphase des Kupolofens 1 mittels der elektrischen Bodenheizung 9 erhitzt. Die Bodenheizung 9 besitzt eine der Ofengröße entsprechende Leistung, von beispielsweise zwischen 1 und 2 MW, und kann daher den Boden 8 schnell auf eine ausreichend hohe Temperatur von beispielsweise mehr als 1400 °C bringen, so dass die sich auf dem Boden 8 sammelnde Schmelze 13 im flüssigen Zustand bleibt.

Außerdem wird in der Anfahrphase der Auslass 11 mittels des Gasbrenners 12 vorgewärmt, damit sich über den Auslass 10 abfließende Schmelze 13 nicht in dem Auslass 11 verfestigt und diesen verstopft.

Wenn der Boden 8 eine genügend hohe Temperatur erreicht hat, um die Schmelze 13 flüssig zu halten, und die durch die Gasbrenner 6 nachgelieferte Wärme ausreicht, um die Bodentemperatur zu halten, wird die Bodenheizung 9 abgeschaltet. Im normalen Dauerbetrieb, wenn sich stationäre Temperaturverhältnisse im Kupolofen 1 eingestellt haben, ist der Einsatz der Bodenheizung 9 nicht notwendig.

Die Bodenheizung 9 wird vorzugsweise nicht nur zum Anfahren des Kupolofens 1, sondern auch zum vollständigen Entleeren des Kupolofens 1 verwendet, nachdem die Gasbrenner 6 ausgeschaltet wurden.

## Patentansprüche

1. Schachtofen, insbesondere Kupolofen, mit einem Schacht (3) und mit einem unterhalb des Schachtes (3) angeordneten Ofenunterteil (4) mit einem Boden (8),
**dadurch gekennzeichnet, dass** der Boden (8) des Ofenunterteils (4) mit einer Bodenheizung (9, 14) versehen ist.

2. Schachtofen nach Anspruch 1, **dadurch gekennzeichnet, dass** das Ofenunterteil (4) als Brennkammer mit einem oder mehreren Brennern (6) ausgebildet ist.

3. Schachtofen nach einem der Ansprüche 1 oder 2, **dadurch gekennzeichnet, dass** ein oder mehrere Brenner (14), insbesondere Gasbrenner, als Bodenheizung vorgesehen sind.

4. Schachtofen nach einem der Ansprüche 1 bis 3, **dadurch gekennzeichnet, dass** die Bodenheizung als elektrische Heizung (9) ausgeführt ist.

5. Schachtofen nach Anspruch 4, **dadurch gekennzeichnet, dass** der Boden (8) mit einer feuerfesten Ausmauerung versehen ist und die Bodenheizung (9) in der Ausmauerung angeordnet ist.

6. Schachtofen nach einem der Ansprüche 1 bis 5, **dadurch gekennzeichnet, dass** der Boden (8) eine Neigungswinkel zwischen 1° und 5° gegen die Horizontale aufweist.

7. Schachtofen nach einem der Ansprüche 1 bis 6, **dadurch gekennzeichnet, dass** das Ofenunterteil (4) mit einem Auslass (10, 11) versehen ist und dass eine Auslassheizung (12, 15) zur Beheizung des Auslasses (11) vorgesehen ist.

8. Schachtofen nach Anspruch 7, **dadurch gekennzeichnet, dass** ein Gasbrenner (12) als Auslassheizung vorgesehen ist.

9. Verfahren zum Schmelzen eines Ausgangsmaterials in einem Schachtofen, der einen Schacht (3) und ein unterhalb des Schachtes (3) angeordnetes Ofenunterteil (4) mit einem Boden (8) aufweist, **dadurch gekennzeichnet, dass** der Boden (8) mit einer Bodenheizung (9, 14) beheizt wird.

10. Verfahren nach Anspruch 9, **dadurch gekennzeichnet, dass** das Ofenunterteil (4) als Brennkammer ausgebildet ist und dass das Ausgangsmaterial (2, 16) in den Schacht (3) eingebracht und die Brennkammer (4) mit einem oder mehreren Brennern (6) beheizt wird.

11. Verfahren nach einem der Ansprüche 9 oder 10, **dadurch gekennzeichnet, dass** der Boden (8) mittels der Bodenheizung (9, 14) auf eine Temperatur von mehr als 1000 °C, bevorzugt mehr als 1200 °C, besonders bevorzugt mehr als 1300 °Caufgeheizt wird.

12. Verfahren nach einem der Ansprüche 9 bis 11, **dadurch gekennzeichnet, dass** die Bodenheizung (9, 14) nach Erreichen der stationären Temperaturverhältnisse im Schachtofen ausgeschaltet wird.

13. Verfahren nach einem der Ansprüche 9 bis 12, **dadurch gekennzeichnet, dass** die Bodenheizung (9, 14) zum Entleeren des Schachtofens eingeschaltet wird.

14. Verfahren nach einem der Ansprüche 9 bis 13, **dadurch gekennzeichnet, dass** der Schachtofen als koksloser Kupolofen betrieben wird.

15. Verfahren nach Anspruch 14, **dadurch gekennzeichnet, dass** Ausgangsmaterial (2) zur Mineralwolleherstellung geschmolzen wird.
